# EUROPEAN PATENT APPLICATION

(11) **EP 1 239 351 A2**
(43) Date of publication of application: **11.09.2002**
(21) Application number: 02075743.1
(22) Date of filing: 22.02.2002
(51) Int. Cl.: G05B 15/02

(54) **Methods and computer program products for automated experimental design**

(30) Priority: 22.02.2001 US 270668 P
(71) Applicant: SmithKline Beecham Corporation, Research Triangle Park, North Carolina 27709 (US)
(72) Inventor: Domanico, Paul L., SmithKline Beecham Coporation, North Carolina 27709 (US); Leitner, Peter P., SmithKline Beecham Coporation, North Carolina 27709 (US)
(74) Representative: Reed, Michael Antony

(57) **Abstract**

Methods and computer program products for automated experimental design include software that reduces controls, schedules incubation times, and generates work list commands for controlling a robot to perform multiple experiments. The software allows the user to automate many of the steps conventionally required in designing experiments. As a result, assay creation time is reduced and throughput is increased.

## Description

### Related Applications

This application claims the benefit of U.S. provisional patent application serial no. 60/270,668, filed February 22, 2001, the disclosure of which is incorporated herein by reference in its entirety.

### Technical Field

The present invention relates to methods and computer program products for automated experimental design. More particularly, the present invention relates to computer software for converting an experimental design table of reagent concentrations for individual experiments into robot control information for controlling a robot to perform the individual experiments.

### Background Art

An *in vitro* biochemical assay is a combination of reagents intended to simulate an *in vivo* biological response, such as a biological response caused by a disease. Using assays to simulate biological responses is desirable because it is easier than using live subjects to simulate the responses. Once the desired response has been simulated, a variety of drugs can be applied to the assay to determine which drug or drugs modulate the response. The process of using biochemical assays to simulate biological responses and applying drugs to modulate the responses is something referred to as high throughput screening because a large number of assays and drugs are tested in a relatively short time period.

High throughput screening is a complex process requiring multiple reagents and multiple concentrations of reagents. For example, when optimizing a high throughput screen, it can be desirable to perform experiments using assays containing five reagents with five different concentrations of each reagent. Such an experiment would require 5⁵ or 3625 different assays. Given the small concentrations of reagents in such assays and the small size of micro-titer plates in which the assays are created, such experiments are extremely time-consuming and tedious when performed manually. For example, it might take a scientist one day or more to perform 100 experiments. Accordingly, conventional scientific research focuses on small numbers of reagents where the concentration of only one reagent is varied while the others are maintained constant.

Experimental design uses statistical methods to determine which combinations of reagents to try to determine whether there is interaction between two reagents in an experiment. However, the experimental design can require multiple concentrations of multiple reagents to be used in order to evaluate interactions. As discussed above, manually performing experiments with multiple combinations of reactants is impractical due to the labor and time involved.

Robots, such as the TECAN® GENESIS™, have been used to automate the assay creation process. For example, a robot can consist of a mechanical arm fitted with one or more dispensers that extract stock reagents from a stock supply in one location and place the reagents in different wells in micro-titer plates in another location. However, because the mechanical arm must be instructed specifically on the source and destination of each reagent, programming the robot to perform a single experiment can take longer than performing the experiment manually. Accordingly, even though robotics can automate the process of assay creation, using robotics in such a manner has been impractical for non-repetitive experiments because of the amount of time required to code the instructions for performing the experiment. In addition, because experimental design can require multiple concentrations of multiple reagents, the problem is multiplied, since new instructions must be coded for performing each individual experiment.

Yet another problem with applying robotics to experimental design is that in many cases, it is desirable to schedule incubation times for the addition of different reagents to an assay. For example, it can be desirable to add a first reagent to an assay, wait five minutes, add a second reagent, wait ten more minutes, and add a third reagent. Other robot control software, such as Sagian™ Automated Assay Optimization (AAO). provided with one conventional robot available from Biomek Coulter allows manual control of incubation times. For example, when the robot is performing an experiment, a user can manually monitor the incubation times for different reagents in the experiment. The user can manually pause the robot for the specified incubation times after the addition of each reagent. Such a system is laborintensive because it requires manual scheduling and monitoring of the experiment and controlling the incubation times.

Accordingly, in light of the problems discussed above, there exists a long-felt need for methods and systems for automating the experimental design process.

### Disclosure of the Invention

The present invention includes methods and computer program products for automated experimental design. As used herein, the phrase "automated experimental design" refers to the steps required to generate robot control commands from a list of experiments generated using statistical analysis software. Such steps include organizing the experiments into robot source and destination information, determining controls for the experiments, scheduling incubation times, and generating robot control commands, which are referred to herein as work list commands. In addition to the process of converting experiments into work list commands, the present invention also includes automated methods for pairing experimental results with the original experiment data. Because the process of generating robot control commands is automated, the time for performing multiple experiments is decreased. As a result, a greater number of reagent combinations can be tested.

Accordingly, it is an object of the present invention to provide methods and systems for automated experimental design.

An object of the invention having been stated hereinabove, other objects will be evident as the description proceeds, when taken in connection with the accompanying drawings as best described hereinbelow.

### Brief Description of the Drawings

A detailed description of embodiments of the present invention will now proceed with reference to the accompanying drawings of which:
Figure 1 is a partial block/partial schematic diagram of an exemplary operating environment for the methods and systems for automated experimental design according to embodiments of the present invention;
Figure 2 is a flowchart illustrating exemplary steps for performing automated experimental design according to an embodiment of the present invention;
Figure 3 is a flowchart illustrating exemplary steps for determining and reducing controls according to an embodiment of the present invention;
Figure 4 is a computer-generated image of a micro-titer plate illustrating well locations for experiments and controls generated using automated experimental design software according to an embodiment of the present invention;
Figure 5 is a flowchart illustrating exemplary steps for organizing experiments into source and destination information according to an embodiment of the present invention;
Figure 6 is a flowchart illustrating exemplary steps for generating work list commands according to an embodiment of the present invention;
Figures 7A-7C are a flowchart illustrating exemplary steps for scheduling incubation times according to an embodiment of the present invention; and
Figures 8A and 8B are a flowchart illustrating exemplary steps for processing data according to an embodiment of the present invention.

### Detailed Description of the Invention

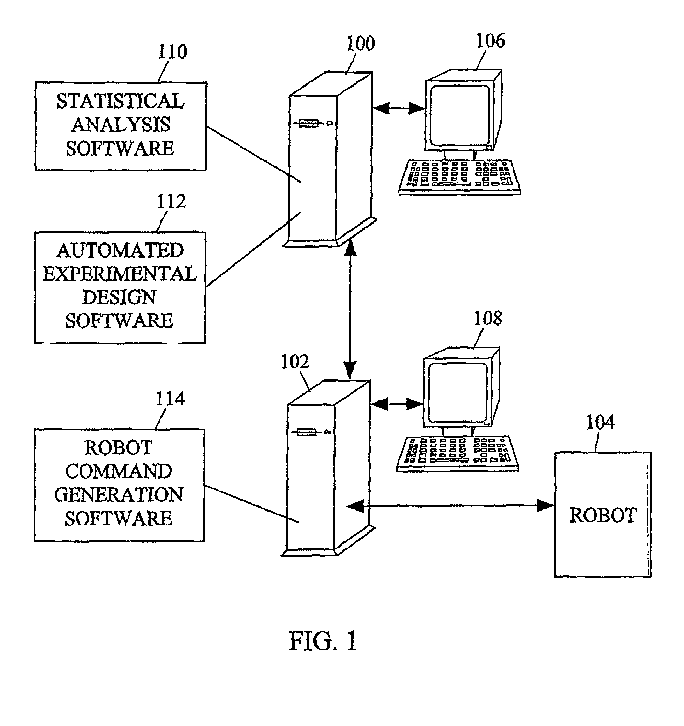

Figure 1 is a partial block/partial schematic diagram of an exemplary operating environment for methods and systems for automated experimental design according to embodiments of the present invention. In Figure 1, the operating environment includes a development computer **100** for developing experiments to be performed by a robot and a robot control computer **102** for outputting commands to a robot **104** for performing the experiments. While the illustrated embodiment includes separate development and control computers, the present invention is not limited to such an embodiment. For example, in an alternative embodiment, development and control can be performed on a single computer.

Computers **100** and **102** can each be commercially available personal computers with standard operating systems, such as WINDOWS® or LINUX®. Computers **100** and **102** preferably also include user interfaces **106** and **108** that allow a user to input commands and view output from computers **100** and **102**.

In order to design complex experiments that include multiple reagents and multiple levels of each reagent, development computer **100** preferably includes statistical analysis software **110**. Statistical analysis software **110** allows the user to input reagents and levels of each reagent to be used in designing experiments. Statistical analysis software **110** generates a protocol table that contains a list of all experiments to be performed. Exemplary experimental design software suitable for use with embodiments of the present invention is JMP®, available from SAS Institute of Cary, North Carolina.

According to an important aspect of the invention, development computer **100** includes automated experimental design software **112**. Automated experimental design software **112** automates many aspects of the experimental design process based on the protocol table created by statistical analysis software **110** and input from the user via interface **106**. Exemplary aspects of experimental design that can be automated by automated experimental design software **112** include assignment of experiments to micro-titer plate wells, reduction of controls, scheduling of incubation times, and other aspects, which will be discussed in more detail below.

Robot control computer **102** controls robot **104** based on output generated by development computer **100**. Robot command generation software **114** generates the actual robot commands based on the output from automated experimental design software **112.** Exemplary robot command generation software suitable for use with embodiments of the present invention is LIQUIDMOVER™ or GEDI™, available from GlaxoSmithKline, Inc.

Robot **104** performs experiments based on commands output from control computer **102**. As described above, an exemplary robot for performing experiments based on software commands comprises a mechanical arm fitted with one or more syringe-like dispensers for extracting stock reagents from stock sources and dispensing the reagents in appropriate wells in one or more micro-titer plates. An exemplary robot suitable for use with embodiments of the present invention is the TECAN® GENESIS™. However, the present invention is not limited to generating robot commands for the TECAN® GENESIS™ robot. Generating commands for a robot capable of dispensing chemicals for assay creation is intended to be within the scope of the invention.

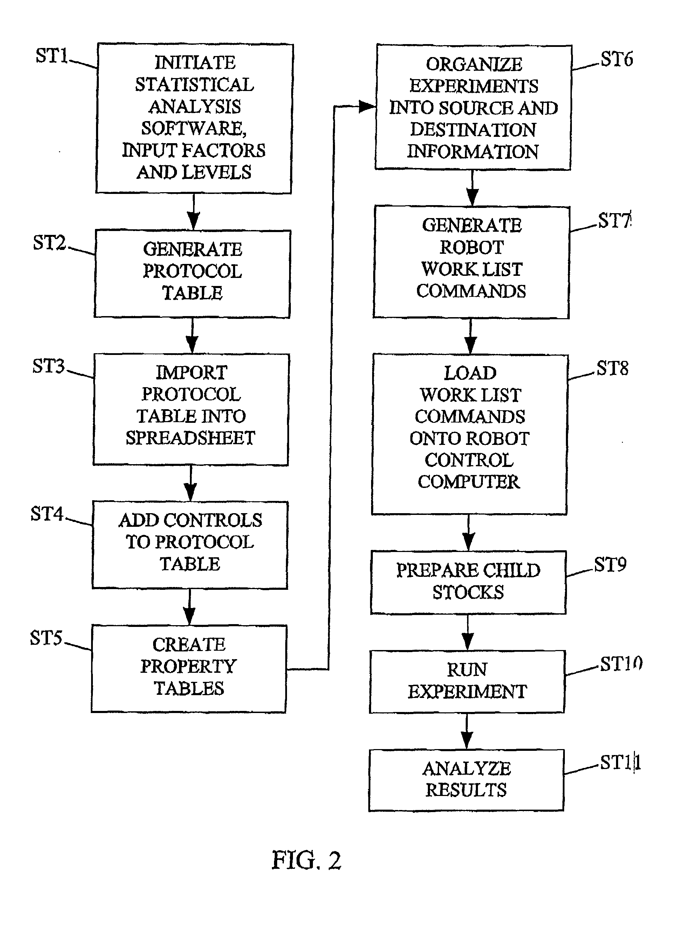

The steps for using automated experimental design software **112** to automate the experimental design process will now be discussed in more detail. Figure 2 is a flowchart of an automated experimental design process according to an embodiment of the present invention. Referring to Figure 2, in step **ST1,** the user initiates statistical analysis software and inputs the factors and levels for the experiment. As used herein, a "factor" is a reagent or incubation between reagents to be used in an experiment. A "level" of a factor is a concentration of a-reagent or minutes of an incubation. Thus, in step **ST1,** the user can optionally test all combinations of four levels of four different reagents. This would result in 4⁴ or 256 different experiments, which would be extremely time-consuming if the experiments were performed manually.

Once the user enters the factors and levels, control proceeds to step **ST2** where a protocol table is generated. This step is performed automatically by statistical analysis software **110** after the user enters the factors and the number levels of each factor. The protocol table includes the reagents, the concentrations of each reagent, and incubation times for each experiment.

Table 1 shown below illustrates an exemplary protocol table that can be generated by statistical analysis software **110.**

**Table 1:**

| **Protocol Table** | | | | | | |
|---|---|---|---|---|---|---|
| NaCl (mM) | MgCl₂ (mM) | BSA (ug/ml) | Substrate (nM) | Incubation (min) | Enzyme (nM) | X Stop Buffer |
| 60 | 0 | 10 | 100 | 20 | 0.5 | 1 |
| 60 | 0 | 10 | 100 | 20 | 5 | 1 |
| 60 | 0 | 10 | 100 | 40 | 0.5 | 1 |
| 60 | 0 | 10 | 100 | 40 | 5 | 1 |
| 60 | 0 | 10 | 1000 | 20 | 0.5 | 1 |
| 60 | 0 | 10 | 1000 | 20 | 5 | 1 |
| 60 | 0 | 10 | 1000 | 40 | 0.5 | 1 |
| 60 | 0 | 10 | 1000 | 40 | 5 | 1 |
| 60 | 0 | 100 | 100 | 20 | 0.5 | 1 |
| 60 | 0 | 100 | 100 | 20 | 5 | 1 |
| 60 | 0 | 100 | 100 | 40 | 0.5 | 1 |
| 60 | 0 | 100 | 100 | 40 | 5 | 1 |
| 60 | 0 | 100 | 1000 | 20 | 0.5 | 1 |
| 60 | 0 | 100 | 1000 | 20 | 5 | 1 |
| 60 | 0 | 100 | 1000 | 40 | 0.5 | 1 |
| 60 | 0 | 100 | 1000 | 40 | 5 | 1 |
| 60 | 10 | 10 | 10 | 20 | 0.5 | 1 |
| 120 | 10 | 10 | 100 | 40 | 0.5 | 1 |
| 120 | 10 | 10 | 100 | 40 | 5 | 1 |
| 120 | 10 | 10 | 1000 | 20 | 0.5 | 1 |
| 120 | 10 | 10 | 1000 | 20 | 5 | 1 |
| 120 | 10 | 10 | 1000 | 40 | 0.5 | 1 |
| 120 | 10 | 10 | 1000 | 40 | 5 | 1 |
| 120 | 10 | 100 | 100 | 20 | 0.5 | 1 |
| 120 | 10 | 100 | 100 | 20 | 5 | 1 |
| 120 | 10 | 100 | 100 | 40 | 0.5 | 1 |
| 120 | 10 | 100 | 100 | 40 | 5 | 1 |
| 120 | 10 | 100 | 1000 | 20 | 0.5 | 1 |
| 120 | 10 | 100 | 1000 | 20 | 5 | 1 |
| 120 | 10 | 100 | 1000 | 40 | 0.5 | 1 |
| 120 | 10 | 100 | 1000 | 40 | 5 | 1 |

In Table 1, each row after the table header represents a single experiment. More particularly, each row includes reagent concentrations and incubation times for an experiment. For example, referring to the first row of Table 1, one experiment includes a 60 millimolar (mM) concentration of NaCI, a 0 mM concentration of MgCl₂, 10 ug/ml concentration of a reagent BSA, and a 100 nanomolar (nM) concentration of a substrate. An incubation time of 20 minutes is specified before adding a 0.5 nM concentration of an enzyme and a 1x concentration of a stop buffer. The remaining rows include concentrations and incubation times for other experiments. In an alternate configuration, a column header represents the name of a reagent transfer step and the rows contain concentrations, concentration units and reagent names. For example, if a particular cell contained "100mM NaCI", the automated experimental design software **112** determines that "100" is the concentration, "mM" is the name of the concentration units and "NaCI" is the reagent name. Automated experimental design software **112** recognizes many of the common units of concentrations, including M, mM, uM, nM, pM, fM, ug/ ml, mg/ ml, g/ ml, %, and ppm. Table 1 only illustrates a portion of the experiments performed in an experimental design. A typical protocol table for a custom designed 4 level, 6 factor experiment can include 256 experiments, not including replicates or controls. The time and difficulty in converting such a table into robot commands before the present invention made experimental design difficult if not impossible.

Referring back to Figure 2, once the user generates the protocol table, the user then imports the table into a spreadsheet **(ST3)**. Importing the table into a spreadsheet can be accomplished by saving the table generated by statistical analysis software **110** in a spreadsheet-compatible format, such as text format. The file containing the protocol table is then opened using the spreadsheet program. Any suitable spreadsheet program can be used for this step. For example, in one embodiment, the spreadsheet program can be MICROSOFT® EXCEL™.

In step **ST4**, automated experimental design software **112** adds controls to the protocol table. A control is an experiment for which the output is used as a background to compare to the other experiments. Adding controls to a protocol table can double the number of experiments required to be performed. Hence, experimental design with controls is even more unsuitable for conventional manual assay creation or manual coding of a robot to perform the assay creation.

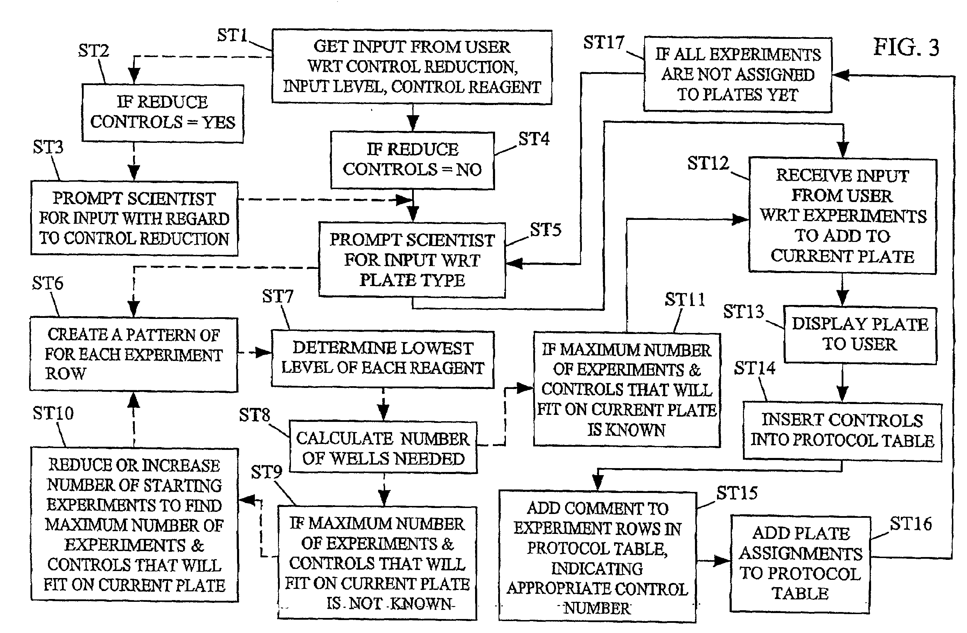

The process of designing and adding controls to the protocol table can be time-consuming. Accordingly, in order to reduce the time required for this process, automated experimental design software **112** includes processes for adding controls to the protocol table, for identifying duplicate controls, and for maximizing micro-titer plate usage. Figure 3 illustrates exemplary steps performed by automated experimental design software **112** in adding controls to the protocol table according to an embodiment of the present invention. Referring to Figure 3, in step **ST1,** automated experimental design software **112** receives input from the user with regard to the control reagent, the input level, the number of replicates per experiment, and whether the user desires to reduce the number of controls. For example, if the user has prior knowledge about the interactions in this experiment, it might not be necessary to add a control for every experiment. In Figure 3, the dashed lines represent the path taken by automated experimental design software **112** if control reduction is selected and the solid lines represent the path taken by automated experimental design software **112** if control reduction is not selected. Block **ST2** in Figure 3 indicates the start of path taken by automated experimental design software **112** if the user desires to reduce the number of controls. In step ST3, automated experimental design software **112** prompts the user for input regarding the reagents that do not require controls. For example, automated experimental design software 112 can present the user with a list of the reagents that are used in each experiment. For the protocol table (Table 1) set forth above, the user can determine that NaCI has no effect on controls. Thus, the user can select NaCI as the reagent that has no effect on controls.

Block **ST4** indicates the start of path taken by automated experimental design software **112** if control reduction is not desired. Once the user has either indicated that control reduction is not desired or indicated the reagent(s) for which controls are not required (**ST3** or **ST4**), automated experimental design software **112** prompts the user for input regarding the type of micro-titer plate used for this design (**ST5**). For example, a 96 or a 384-well micro-titer plate can be selected.

From step **ST5,** if control reduction was selected, control proceeds to step **ST6** where automated experimental design software **112** creates a pattern for each experiment row. As used herein, the term "pattern" refers to a data structure used internally by automated experimental design software **112** to identify experiments and determine which experiments do not need controls based on the user input received in step **ST3**. The pattern for each experiment consists of the levels of each reagent used in the experiment. The levels of each reagent are separated by tabs. If a reagent is selected by the user as one for which control does not need to be performed, the level of the reagent is omitted from the pattern, leaving only the tab or tabs that separate that reagent from the remaining reagents in the experiment. For example, suppose an experiment requires a 60 mM concentration of NaCI, a 0 mM concentration of MgCl₂, a 10 ug/ml concentration of BSA, and a 100 nM concentration of a substrate, the pattern would be "60|0|10|100." In this example, "|" represents the tab character. Now suppose that the user indicates in step **ST3** that no controls are needed for MgCl₂. The corresponding pattern for this experiment would be "60||10|100." The two side-by-side tabs indicate that no control is required for MgCl₂. Automated experimental design software **112** creates a pattern for all of the experiments in the protocol table and generates controls for all unique experiments. Continuing with the example, if an experiment requires a 60 mM concentration of NaCl, a 10 nM concentration of MgCl₂, a 10 ug/ml concentration of BSA, and a 100 nM concentration of substrate, the corresponding pattern would be "60∥10|100." This is the same pattern as the example above which required 0 mM MgCl₂. Since the patterns are identical, only one control would be added for both experiments. By generating patterns that allow experiments that are equivalent for control purposes to be easily identified, automated experimental design software **112** increases the efficiency of micro-titer plate usage.

In step **ST7**, automated experimental design software **112** determines the lowest level of each reagent in the protocol table. This level will be used in controls for the reagent that the user indicated was not of importance for control purposes. Using the lowest level of the non-controlled reagent reduces the amount of reagent waste. However, the present invention is not limited to using the lowest level of the non-controlled reagent. Any level could be used, at the cost of increased reagent waste.

In step **ST8,** automated experimental design software **112** calculates the number of unique patterns to determine the number of wells required for the experiment. One control well is selected for each unique pattern, as discussed above. Because the patterns automatically identify experiments that can be grouped together for control purposes, the number of controls, and consequently, the number of wells utilized is automatically reduced.

Block **ST9** represents the path taken by automated experimental design software **112** if the maximum number of experiments and controls that will fit on the current plate is not known. This condition occurs when the number of experiments plus controls either exceeds or is less than the number of available wells in the current micro-titer plate. In order to determine the maximum number of experiments, automated experimental design software **112** starts with an initial number of experiments, adds the required controls, and determines whether the total amount of experiments plus controls will fit on the current plate. In step **ST10**, automated experimental design software **112** reduces or increases the number of starting experiments to determine the maximum number of starting experiments that will fit on the current plate. Automated experimental design software **112** iterates through steps **ST6-ST10** until the maximum number of experiments that will fit on the current plate has been determined. These steps ensure that plate usage is maximized.

Step **ST11** represents the start of the path taken by automated experimental design software **112** if the maximum number of experiments and their respective controls that will fit on the current plate is known. In step **ST12**, automated experimental design software **112** receives input from the user with regard to the number of experiments to add to the current plate. This number will most likely be the number calculated by automated experimental design software **112** in steps **ST6-ST10.**

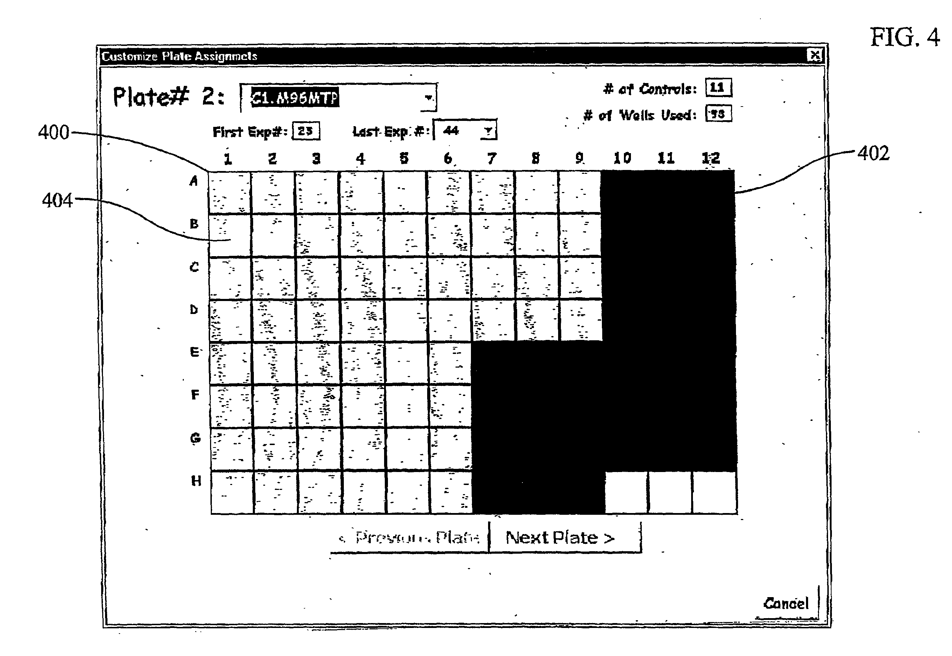

In step **ST13,** automated experimental design software **112** creates a graphical representation of the micro-titer plate and indicates the wells that are used for experiments and those that are used for controls. For example, wells that are shaded in a first color, e.g., blue, can be used for experiments. Wells that are shaded in a second color, e.g., red, can be used for controls. Figure 4 is a graphical representation of a micro-titer plate including control and experiment wells that can be created by automated experimental design software **112** and displayed to the user upon request. In Figure 4, image **400** represents a 96-well micro-titer plate. Control wells, such as well **402**, are shown in a first color or shading. Experiment wells, such as well **404**, are shown in a second color or shading that is different from the first color or shading. Automatically creating such a representation accessible by the user allows the user to visualize how the experiments will actually be performed when the control program is executed by the robot. The image illustrated in Figure 4 can be printed by the user to monitor the actual experiment.

Returning to Figure 3, after creating the micro-titer plate graphical representation, in step **ST14**, automated experimental design software **112** adds the controls to the protocol table. In step **ST15**, automated experimental design software **112** adds a comment to the experiment rows in the protocol table indicating the appropriate control number. For example, the comment added to row 1, which corresponds to experiment 1, can indicate that the control for this experiment is control # 1. If controls were reduced, other experiments might also refer to control # 1 in their comments. As used herein, the term "comment" refers to text that can be added to a cell in most commercially available spreadsheet programs. The text is displayed when the mouse pointer is positioned on top of the corresponding cell. Such comments allow the user to quickly and easily identify controls for experiments. However, the present invention is not limited to using comments to identify controls. For example, in an alternative implementation, the number of the control can be added as a separate column in the protocol table for each experiment. In step **ST16**, automated experimental design software **112** adds plate assignments to the protocol table. Block **ST17** represents the path taken by automated experimental design software **112** if all experiments have not been assigned to plates. If all experiments have not been assigned to plates, steps **ST5-ST17** are repeated until all experiments are assigned.

Table 2 shown below illustrates the results of utilizing automated experimental design software **112** to add controls, plate assignments, and well assignments to the protocol table.

**Table 2:**

| **Protocol Table with Controls and Plate Assignments** | | | | | | | | | | | |
|---|---|---|---|---|---|---|---|---|---|---|---|
| mM NaCl | mM MgCl₂ | ug/ ml BSA | NM Substrat e | Incubation (min) | NM Enzyme | X Stop Buffer | Exper # | Destination Plate Position | Well Location Rep# 1 | Well Location Rep# 2 | Well Location Rep# 3 |
| 60 | 0 | 10 | 100 | 20 | 0.5 | 1 | Exp# 1 | C1.F96MTP | A1 | A2 | A3 |
| 60 | 0 | 10 | 100 | 20 | 5 | 1 | Exp# 2 | C1.F96MTP | B1 | B2 | B3 |
| 60 | 0 | 10 | 100 | 40 | 0.5 | 1 | Exp# 3 | C1.F96MTP | C1 | C2 | C3 |
| 60 | 0 | 10 | 100 | 40 | 5 | 1 | Exp# 4 | C1.F96MTP | D1 | D2 | D3 |
| 60 | 0 | 10 | 1000 | 20 | 0.5 | 1 | Exp# 5 | C1.F96MTP | E1 | E2 | E3 |
| 60 | 0 | 10 | 1000 | 20 | 5 | 1 | Exp# 6 | C1.F96MTP | F1 | F2 | F3 |
| 60 | 0 | 10 | 1000 | 40 | 0.5 | 1 | Exp# 7 | C1.F96MTP | G1 | G2 | G3 |
| 60 | 0 | 10 | 1000 | 40 | 5 | 1 | Exp# 8 | C1.F96MTP | H1 | H2 | H3 |
| 60 | 0 | 100 | 100 | 20 | 0.5 | 1 | Exp# 9 | C1.F96MTP | A4 | A5 | A6 |
| 60 | 0 | 100 | 100 | 20 | 5 | 1 | Exp# 10 | C1.F96MTP | B4 | B5 | B6 |
| 60 | 0 | 100 | 100 | 40 | 0.5 | 1 | Exp# 11 | C1.F96MTP | C4 | C5 | C6 |
| 60 | 0 | 100 | 100 | 40 | 5 | 1 | Exp# 12 | C1.F96MTP | D4 | D5 | D6 |
| 60 | 0 | 100 | 1000 | 20 | 0.5 | 1 | Exp# 13 | C1.F96MTP | E4 | E5 | E6 |
| 60 | 0 | 100 | 1000 | 20 | 5 | 1 | Exp# 14 | C1.F96MTP | F4 | F5 | F6 |
| 60 | 0 | 100 | 1000 | 40 | 0.5 | 1 | Exp# 15 | C1.F96MTP | G4 | G5 | G6 |
| 60 | 0 | 100 | 1000 | 40 | 5 | 1 | Exp# 16 | C1.F96MTP | H4 | H5 | H6 |
| 120 | 10 | 100 | 100 | 40 | 5 | 1 | Exp# 60 | C1.R96MTP | G4 | G5 | G6 |
| 120 | 10 | 100 | 1000 | 20 | 0.5 | 1 | Exp# 61 | C1.R96MTP | H4 | H5 | H6 |
| 120 | 10 | 100 | 1000 | 20 | 5 | 1 | Exp# 62 | C1.R96MTP | A7 | A8 | A9 |
| 120 | 10 | 100 | 1000 | 40 | 0.5 | 1 | Exp# 63 | C1.R96MTP | B7 | B8 | B9 |
| 120 | 10 | 100 | 1000 | 40 | 5 | 1 | Exp# 64 | C1.R96MTP | C7 | C8 | C9 |
| 120 | 0 | 100 | 1000 | 20 | 0 | 1 | Con# 20 | C1.R96MTP | D7 | D8 | D9 |
| 120 | 0 | 100 | 1000 | 40 | 0 | 1 | Con# 21 | C1.R96MTP | E7 | E8 | E9 |
| 120 | 0 | 10 | 100 | 20 | 0 | 1 | Con# 22 | C1.R96MTP | F7 | F8 | F9 |
| 120 | 0 | 10 | 100 | 40 | 0 | 1 | Con# 23 | C1.R96MTP | G7 | G8 | G9 |
| 120 | 0 | 10 | 1000 | 20 | 0 | 1 | Con# 24 | C1.R96MTP | H7 | H8 | H9 |
| 120 | 0 | 10 | 1000 | 40 | 0 | 1 | Con# 25 | C1.R96MTP | A10 | A11 | A12 |
| 120 | 0 | 100 | 100 | 20 | 0 | 1 | Con# 26 | C1.R96MTP | B10 | B11 | B12 |
| 120 | 0 | 100 | 100 | 40 | 0 | 1 | Con# 27 | C1.R96MTP | C10 | C11 | C12 |

In Table 2, the column labeled "Incubation" contains the incubation time in minutes before adding the enzyme in each experiment. The column "Exper. #" contains the experiment number, or control number, for each experiment. For example, the cell labeled "Con# 20" indicates that the data in this row is a control for all experiments that refer to "Con# 20" in their comments. The column labeled "Destination Plate Position" contains the destination plate position on the robot for each experiment. The columns labeled "Well Location:" contains well assignments assigned by automated experimental design software **112** for each experiment or control, using conventional alphanumeric nomenclature, where the letter designates the row and the number represents the column within a grid of wells.

Returning to Figure 2, once the controls have been added to the protocol table, in step **ST5,** the property tables are created. As used herein, the phrase "property table" refers to a set of tables that contain data derived from the protocol table needed to perform the experiments. Because the protocol table is stored in a spreadsheet, it is understood that data can be derived from the protocol table by parsing the various cells in the protocol table using appropriate spreadsheet commands. According to the present embodiment, automated experimental design software **112** parses the protocol table and obtains data for the various property tables. In some instances, input from the user can be required, as will be discussed below.

Tables 3-6 shown below are exemplary property tables that can be created by automated experimental design software **112** according to an embodiment of the present invention.

**Table 3:**

| **Occurrences of Reagent Concentrations** | | | | | | | |
|---|---|---|---|---|---|---|---|
| No. | Parameter Name | Conc.1 | Reps. | Conc.2 | Reps. | Conc.3 | Reps. |
| 1 | mM NaCl | 60 | 43 | 120 | 48 | | |
| 2 | mM MgCl2 | 0 | 59 | 10 | 32 | | |
| 3 | ug/ml BSA | 10 | 44 | 100 | 47 | | |
| 4 | nM Substrate | 100 | 46 | 1000 | 45 | | |
| 5 | nM Enzyme | 0 | 27 | 0.5 | 32 | 5 | 32 |
| 6 | X Stop Buffer | 1 | 91 | | | | |

**Table 4:**

| **Reagent Transfer Volumes** | | | |
|---|---|---|---|
| Reagent Addition Step # | Column Header (Reagent Addition Step) | Default Transfer Volume (ul) | Final Volume in ul (Optional) |
| 1 | mM NaCl | 10 | 60 |
| 2 | mM MgCl2 | 10 | 60 |
| 3 | ug/ml BSA | 15 | 60 |
| 4 | nM Substrate | 20 | 60 |
| 5 | nM Enzyme | 5 | 60 |
| 6 | X Stop Buffer | 120 | 180 |

**Table 5:**

| **Parent Stock Concentrations for Calculation of Intermediate Stocks and Waste** | | | |
|---|---|---|---|
| Reagent # | Reagent Name | Stock Conc. (Optional) | % Extra (waste) |
| 1 | NaCI | 5000 | 30 |
| 2 | MgCl2 | 100 | 30 |
| 3 | BSA | 1000 | 30 |
| 4 | Substrate | 10000 | 25 |
| 5 | Enzyme | 5000 | 20 |
| 6 | Stop Buffer | 10 | 30 |

**Table 6:**

| **Volumes Required to Make Intermediate Stocks** | | | | | | | | | |
|---|---|---|---|---|---|---|---|---|---|
| Intermed. Reag. # | Param. Name | Fin. Assay Conc. | Intermediate Reagent Conc. | Rack Name | Well # | Parent Reagent Stock Vol (ul) | Buffer Vol (ul) | Total Intermed. Reagent Vol. (ul) | Liquid Class |
| 1 | NaCl | 60mM | 360mM | C3.F96DeepWell | 1 | 127.2 | 1638.8 | 1766.0 | Water AED |
| 2 | NaCl | 120m M | 720mM | C3.F96DeepWell | 2 | 271.2 | 1611.8 | 1833.0 | Water AED |
| 3 | MgCl2 | 0mM | 0mM | C3.M19Trough | 1 | 0.0 | 2801.0 | 2801.0 | Water AED |
| 4 | MgCl2 | 10mM | 60mM | C3.F96DeepWell | 3 | 778.8 | 519.2 | 1298.0 | Water AED |
| 5 | BSA | 10 ug/ml | 40ug/ml | C3.M19Trough | 2 | 123.0 | 2951.0 | 1298.0 | Water AED |
| 6 | BSA | 100 ug/ml | 400ug/ml | C3.M19Trough | 3 | 1299.8 | 1949.7 | 3074.0 | Water AED |
| 7 | Substrate | 100nM | 300nM | C3.M19Trough | 4 | 118.5 | 3831.5 | 3249.5 | Water AED |
| 8 | Substrate | 1000 nM | 3000nM | C3.M19Trough | 5 | 1162.5 | 2712.5 | 3950.0 | Water AED |
| 9 | Enzyme | 0.5 nM | 0nM | C3.F96DeepWell | 4 | 0.8 | 625.2 | 3875.0 | Water AEDZ Asp |
| 10 | Enzyme | 5nM | 6nM | C3.F96DeepWell | 5 | 7.5 | 618.5 | 626.0 | Water AEDA spZ |
| 11 | Enzyme | 0nM | 60nM | C3.F96DeepWell | 6 | 0.0 | 536.0 | 626.0 | Water AEDA spZ |
| 12 | Stop Buffer | 1X | 1.5X | C3.R40mlTrough | 1 | 6538.2 | 37049. 8 | 43588.0 | Water AED |

Table 3 contains the number of times each concentration of each level is present in the protocol table. For example, Table 3 indicates that 1x concentration of the reagent "Stop Buffer" is replicated 91 times in the protocol table. Table 3 can be generated by reading the input cells for each reagent in the protocol table and counting the number of times each unique concentration appears. Similar counts are obtained and calculated for the remaining reagents in the protocol table. This data is used in generating the robot commands, as will be discussed in more detail below.

Table 4 contains reagent transfer volumes generated by automated experimental design software **112**. In Table 4, the "Reagent Addition Step #" column contains numbers indicative of the order in which transfer steps are to be added to a well for a given experiment. The "Column Header" column contains the transfer step corresponding to each column in the protocol table. The "Default Transfer Volume" column contains the default volume of each transfer step from the appropriate intermediate concentration. The "Final Volume" column indicates the total volume of each reagent when the experiment reaches a point that can be decided by the user. For example, since the default transfer volume of NaCI is 10 ul and the total volume is 60 ul, the intermediate concentration must be 6 times the final concentration for this experiment.

Table 5 contains parent stock concentrations and waste percentages entered by the user. The values in Table 5 and Table 4 are used for calculation of intermediate stock concentrations and volumes. As used herein, "parent stock" refers to the stock concentration of a source of a reagent from which intermediate stock concentrations required for individual experiments are derived. "Child stock" or "intermediate stock" refers to a reagent derived from the parent stock for use in individual experiments. The "Reagent #" and "Reagent Name" columns contain the number and name of each reagent in the protocol. The "Stock Concentration" column contains the parent stock concentration of each reagent in the units specified in the Protocol Table. The Percent Waste column contains the amount of waste of child concentrations needed to account for mechanical limitations of the robot. For example, the robot performing the experiment may not be able to extract all of a child stock from a given well when the well becomes nearly empty. Accordingly, an appropriate amount of waste concentration is added to each well to ensure that sufficient stock is present to complete all of the experiments in a given design.

Table 6 contains total volumes and parent stock concentrations for calculating children stocks. For example, if the final assay concentration of 100mM NaCI is desired and 10ul of the intermediate NaCI concentration is diluted in a final assay volume of 50ul, it would be desirable to create the intermediate concentration at 500mM NaCI. Automated experimental design software **112** automates the process of determining required volumes of intermediate stocks, as will be discussed in more detail below.

In Table 6, the first two columns contain the number and name of each reagent for which an intermediate concentration is to be prepared. The "Final Assay Concentration" column contains the desired final concentration of each reagent for an experiment. The "Intermediate Reagent Concentration" column contains the intermediate reagent concentration calculated by automated experimental design software **112** in order to yield the desired final assay concentration, given the final assay volume. The "Rack Name" column contains well identifiers for racks in which the intermediate concentrations will be located. These names and wells are chosen by the user based on where the user decides to place the stock concentrations on the robot. The user can choose from a graphical display of plate and well numbers presented by the automated experimental design software **112**. The "Well #" column contains identifier numbers for the well in each rack in which the intermediate reagent concentrations will be located. The "Parent Reagent Stock" volume gives the volume of parent stock required to make the desired intermediate concentration. The "Buffer Volume" column lists the volume of buffer required to make each intermediate concentration. The "Total Intermediate Reagent Vol (ul)" column in Table 6 indicates the total intermediate reagent volume required for a group of experiments. The values in this column are calculated automatically by automated experimental design software **112** based on the total number of experiments that use each concentration times the total volume used for each experiment, including waste and an additional dead volume assigned to each plate type. Given the total volume of required child stock, and the parent concentration, the amount of buffer and the volume of parent stock required to produce each child stock concentration can be determined. Again, because these values are determined automatically, the time and labor required to set up multiple experiments is reduced. The final column in Table 6 is the liquid class for each reagent concentration. The "Liquid Class" column indicates the liquid class for each intermediate reagent.

Once the user enters appropriate parameters in Tables 4 and 5, automated experimental design software **112** automatically generates Table 6. The "Intermediate Reagent Conc." column in Table 6 indicates the intermediate stock concentrations required to produce each assay concentration listed in the "Final Assay Conc." column. Intermediate stock concentrations are calculated automatically by automated experimental design software **112** based on the total amount of dilution of the reagent. Reagent dilution is calculated by the automated experimental design software **112** based on the final assay volume and transfer volume in the "Final Volume in ul" and "Default Transfer Volume (ul)" columns of Table 4. For example, from the "Final Assay Conc." column of Table 6, one required assay concentration for NaCI is 60mM. From the "Default Transfer Volume (ul)" and "Final Volume in ul" columns of Table 4, 10ul of NaCI is diluted to form a 60ul total assay volume. Thus, for each assay, the dilution factor for NaCI is 6:1. Accordingly, in order to produce an assay concentration of 60mM when the dilution factor is 6:1, the required intermediate stock concentration is 360mM. From the "Stock Conc." Column of Table 6, it is determined that the parent stock concentration of NaCI is 5000mM. The required intermediate concentration of 360mM is obtained by diluting the parent stock by a factor of 5000/360 or 13.889. In the case of the intermediate stock concentration of 360mM NaCI, the automated experimental design software **112** calculates the required amount of parent stock and dilution buffer based on the dilution factor of 13.889 and the required intermediate stock volume of 1766ul in the "Total Intermed. Reagent Vol" column of Table 6. Thus, the required parent stock and dilution buffer volumes of 127.2ul and 1638.8ul respectively are added to the "Parent Reagent Stock Vol" and "Buffer Vol" columns of Table 6. The required intermediate stock concentrations and volumes, parent stock volumes and buffer volumes were previously calculated manually by the user. Calculating these values automatically reduces time for setting up the experiments and also the likelihood of error.

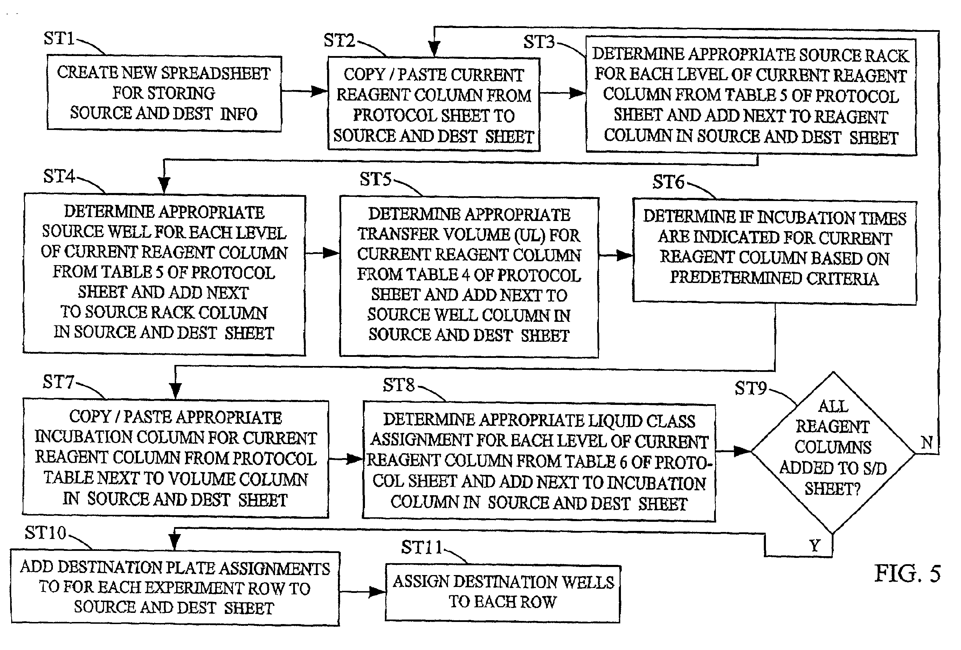

Returning to Figure 2, once the property tables have been created, automated experimental design software **112** organizes the experiments into source and destination information (step **ST6**). "Source" refers to the location that the robot uses to obtain a reagent for a given experiment. The source is one of the wells in one of the racks that stores a specific concentration of a reagent. "Destination" refers to the location of the well in the micro-titer plate where the experiment is being performed. Part of this step requires user input and part is performed automatically by automated experimental design software **112**. The steps for organizing the experiments into source and destination are described in detail in Figure 5. Referring to Figure 5, in step **ST1,** automated experimental design software **112** creates a new spreadsheet for holding the source and destination information. This operation can be performed using the Add New Sheet command in most commercially available spreadsheets. In step **ST2**, automated experimental design software **112** copies and pastes the current reagent column from the protocol table into the source and destination sheet. Here, the phrase "current reagent column" refers to any of the reagent columns in Table 1.

Once a column is copied to the source and destination spreadsheet, automated experimental design software **112** automatically organizes the information according to source and destination. For example, in step **ST3**, automated experimental design software **112** determines the appropriate source rack for each level of each reagent in the current reagent column using Table 5 and adds the source rack next to the reagent column for each reagent in the source and destination sheet.

Once automated experimental design software **112** determines the appropriate source rack for each reagent concentration, in **ST4** automated experimental design software **112** determines the source well in each rack for reagent concentration. This information can also be obtained from Table 5. For example, if a given experiment requires a 360 mM concentration of NaCI, from Table 5, this concentration is found in Rack C3.F96, well 1. The source well for each level of each reagent is then added next to the source rack column in the source and destination sheet.

In step **ST5,** automated experimental design software **112** determines the appropriate transfer volume for each reagent in the current reagent column. This information can be found in the "Default Transfer Volume (ul)" column of Table 4. The transfer volume for each reagent is then added next to the source well column in the source and destination sheet.

In step **ST6**, automated experimental design software **112** determines if incubation times are indicated in the current reagent column based on the following criteria: 1) incubation times must be stored in the protocol table immediately to the right of the reagent columns, and 2) the first five letters of the incubation column header must be "Incub" (case sensitive). If automated experimental design software **112** determines that incubation times are present, then the program stores the incubation times in the next column of the source and destination sheet.

In step **ST7**, automated experimental design software **112** copies and pastes the appropriate incubation column for the current reagent column from the protocol table next to the volume column in the source and destination sheet. If incubation times are not present, step **ST7** can be omitted. In step **ST8**, automated experimental design software **112** determines the appropriate liquid class assignment for each level of the current reagent column from Table 6 and adds this column next to the incubation column in the source and destination sheet. In step **ST9**, if all reagent columns are not added to the source and destination sheet, control returns to step **ST2**. If all reagent columns have been added to the source and destination sheet, in step **ST10** automated experimental design software **112** adds destination plate assignments for each experiment row to the source and destination sheet. The destination plate assignments were generated during the control adding process described above with regard to Figure 3. In step **ST11,** automated experimental design software **112** assigns destination wells to each row. The destination wells can be assigned based on the number of wells in the current destination plate and the number of replicates. Automated experimental design software **112** adds the destination row column to the immediate right of the destination plate column in the source and destination sheet.

Tables 7 and 8 shown below illustrate exemplary data that automated experimental design software **112** may generate and store in the source and destination sheet.

**Table 7:**

| **Destination Information Displayed in Source and Destination Sheet** | | | |
|---|---|---|---|
| **Destin Rack** | **Destin Well, Rep #1** | **Destin Well, Rep #2** | **Destin Well, Rep #3** |
| C1.F96MTP | 1 | 9 | 17 |
| C1.F96MTP | 2 | 10 | 18 |
| C1.F96MTP | 3 | 11 | 19 |
| C1.F96MTP | 4 | 12 | 20 |
| C1.F96MTP | 5 | 13 | 21 |
| C1.F96MTP | 6 | 14 | 22 |
| C1.F96MTP | 7 | 15 | 23 |
| C1.F96MTP | 8 | 16 | 24 |
| C1.F96MTP | 25 | 33 | 41 |
| C1.F96MTP | 26 | 34 | 42 |
| C1.F96MTP | 27 | 35 | 43 |
| C1.F96MTP | 28 | 36 | 44 |
| C1.F96MTP | 29 | 37 | 45 |
| C1.F96MTP | 30 | 38 | 46 |
| C1.F96MTP | 31 | 39 | 47 |
| C1.F96MTP | 32 | 40 | 48 |
| C1.F96MTP | 49 | 57 | 65 |
| C1.F96MTP | 50 | 58 | 66 |
| C1.F96MTP | 51 | 59 | 67 |
| C1.F96MTP | 52 | 60 | 68 |
| C1.F96MTP | 53 | 61 | 69 |
| C1.F96MTP | 54 | 62 | 70 |
| C1.F96MTP | 55 | 63 | 71 |
| C1.F96MTP | 56 | 64 | 72 |
| C1.F96MTP | 73 | 81 | 89 |
| C1.F96MTP | 74 | 82 | 90 |
| C1.F96MTP | 75 | 83 | 91 |
| C1.F96MTP | 76 | 84 | 92 |
| C1.F96MTP | 77 | 85 | 93 |
| C1.F96MTP | 78 | 86 | 94 |
| C1.F96MTP | 79 | 87 | 95 |
| C1.F96MTP | 80 | 88 | 96 |
| C1.M96MTP | 1 | 9 | 17 |

**Table 8:**

| **Source Information Displayed in Source and Destination Sheet** | | | | | |
|---|---|---|---|---|---|
| **NM Substrate** | **Source Rack** | **Source Well** | **Volume (uL)** | **Incub Time** | **Liquid Class** |
| 100 | C3.M19Trough | 4 | 20 | 20 | WaterAED |
| 100 | C3.M19Trough | 4 | | 20 | WaterAED |
| 100 | C3.M19Trough | 4 | | 40 | WaterAED |
| 100 | C3.M19Trough | 4 | | 40 | WaterAED |
| 1000 | C3.M19Trough | 5 | | 20 | WaterAED |
| 1000 | C3.M19Trough | 5 | | 20 | WaterAED |
| 1000 | C3.M19Trough | 5 | | 40 | WaterAED |
| 1000 | C3.M19Trough | 5 | | 40 | WaterAED |
| 100 | C3.M19Trough | 4 | | 20 | WaterAED |
| 100 | C3.M19Trough | 4 | | 20 | WaterAED |
| 100 | C3.M19Trough | 4 | | 40 | WaterAED |
| 100 | C3.M19Trough | 4 | | 40 | WaterAED |
| 1000 | C3.M19Trough | 5 | | 20 | WaterAED |
| 1000 | C3.M19Trough | 5 | | 20 | WaterAED |
| 1000 | C3.M19Trough | 5 | | 40 | WaterAED |
| 1000 | C3.M19Trough | 5 | | 40 | WaterAED |
| 100 | C3.M19Trough | 4 | | 20 | WaterAED |
| 100 | C3.M19Trough | 4 | | 20 | WaterAED |
| 100 | C3.M19Trough | 4 | | 40 | WaterAED |
| 100 | C3.M19Trough | 4 | | 40 | WaterAED |
| 1000 | C3.M19Trough | 5 | | 20 | WaterAED |
| 1000 | C3.M19Trough | 5 | | 20 | WaterAED |
| 1000 | C3.M19Trough | 5 | | 40 | WaterAED |
| 1000 | C3.M19Trough | 5 | | 40 | WaterAED |
| 100 | C3.M19Trough | 4 | | 20 | WaterAED |
| 100 | C3.M19Trough | 4 | | 40 | WaterAED |
| 1000 | C3.M19Trough | 5 | | 20 | WaterAED |
| 1000 | C3.M19Trough | 5 | | 40 | WaterAED |
| 100 | C3.M19Trough | 4 | | 20 | WaterAED |
| 100 | C3.M19Trough | 4 | | 40 | WaterAED |
| 1000 | C3.M19Trough | 5 | | 20 | WaterAED |
| 1000 | C3.M19Trough | 5 | | 40 | WaterAED |
| 100 | C3.M19Trough | 4 | | 20 | WaterAED |

Table 7 illustrates destination rack and well information generated for the experiments and controls extracted from the protocol table. Each row in Table 7 represents the specific experiment or control from the same row in the Protocol sheet. Table 8 illustrates source rack, source well, volume, incubation time, and liquid class information for one of the reagents. In the illustrated example in Table 8, the reagent is the substrate as specified in the protocol table. It is understood that tables similar to Tables 7 and 8 will be generated for each of the reagents using the steps described in Figure 5.

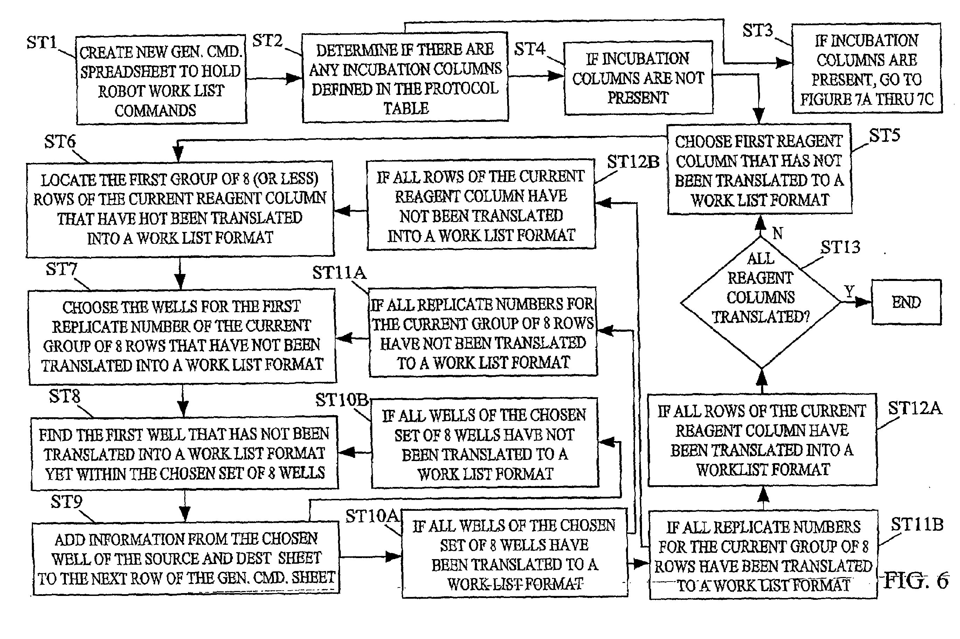

Returning to Figure 2, once the experiments have been organized into source and destination information, in step **ST7**, automated experimental design software **112** generates robot work list commands. Figure 6 illustrates exemplary steps that can be performed by automated experimental design software **112** in automatically generating robot work list commands according to an embodiment of the present invention. As discussed above, the phrase "robot work list commands" refers to information for controlling a robot to perform an experiment. Such information can include source rack and well information, destination rack and well information transfer time, transfer volume, and liquid class for each reagent in each experiment. Referring to Figure 6, in step **ST1,** automated experimental design software **112** creates a new sheet for storing the robot work list commands. This sheet will be referred to herein as the "generate commands" or "GenCmd" sheet. In step **ST2**, automated experimental design software **112** determines whether any incubation columns are present.

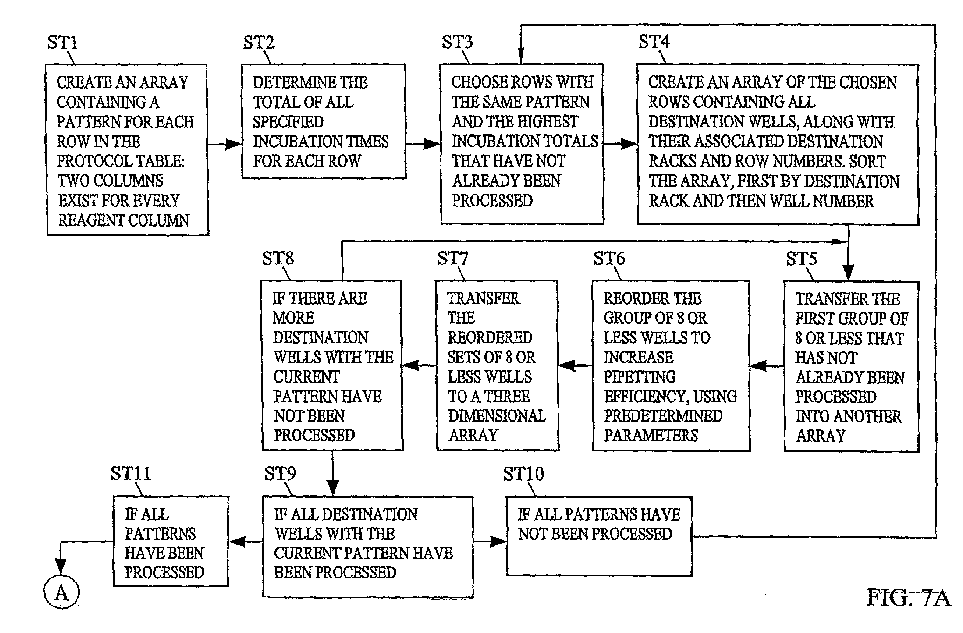

In step **ST3,** if incubation columns are present, control proceeds to Figures 7A-7C where automated experimental design software **112** schedules incubation times and creates the work list commands. The scheduling of incubation times will be discussed in further detail below. In step **ST4,** if incubation columns are not present, control proceeds to step **ST5.** In step **ST5,** automated experimental design software **112** selects the first reagent column that has not been translated into work list format. In step **ST6**, automated experimental design software **112** locates the first group of 8 or fewer rows of the current reagent column that have not been translated into a work list format. In step **ST7**, automated experimental design software **112** chooses the wells for the first replicate number of the current group of 8 rows that have not been translated into a work list format. In step **ST8,** automated experimental design software **112** finds the first well that has not been translated into a work list format of the set of 8 wells. In step **ST9**, automated experimental design software **112** adds the following information from the source and destination sheet to the next row of the GenCmd sheet:
Source rack to column 1
Source well to column 2
Destination rack to column 3
Destination well to column 4
Transfer volume to column 5
Transfer time after start to column 8
Liquid class to column 9

After adding the above-referenced information to the GenCmd sheet, automated experimental design software **112** determines if all wells of the chosen set of 8 wells have been translated into work list format and if all replicate numbers for the current group of 8 rows have been translated to work list format. Blocks **ST10A** and **ST11A** represent the path taken by automated experimental design software **112** if all wells of the chosen set have been translated into work list format and if the current group of 8 rows have not been translated into work list format. If this condition occurs, steps **ST7-ST9** are repeated until work list commands have been generated for all replicates of the current group of 8 rows.

Block **ST10B** represents the path taken by automated experimental design software **112** in generating work list commands if all wells of the chosen set of 8 wells have not been translated into work list format. If this condition occurs, steps **ST8** and **ST9** are repeated until work list commands have been generated for all wells of the chosen set of 8 wells.

Step **ST11B** represents the path taken by automated experimental design software **112** if all wells of the chosen set of 8 wells have been translated to work list format and all replicate numbers for the current group of 8 rows have been translated into work list format. If this condition is satisfied, automated experimental design software **112** then determines whether all rows of the current reagent column have been translated into work list format. Step **ST12A** represents the path taken by automated experimental design software **112** if all rows of the current reagent column have been translated into work list format. If this condition is satisfied, in step **ST13**, automated experimental design software **112** determines whether all reagent columns have been translated. If all reagent columns have not been translated, control returns to step **ST5**, where automated experimental design software **112** chooses the first reagent column that has not been translated (i.e. N=No) into work list format. Then steps **ST6-ST13** are repeated until all reagent columns have been translated. In step **ST13**, if all reagent columns have been translated (i.e. Y=Yes), the work list generation portion of automated experimental design software **112** ends.

Step **ST12B** represents the path taken by automated experimental design software **112** if all rows of the current reagent column have not been translated into a work list format. If this occurs, steps **ST6-ST11B** are repeated until all rows of the current reagent column have been translated into work list format. Thus, based on the steps illustrated in Figure 6, the raw data in the protocol table is converted into work list format that can be used to control a robot to perform specific liquid movements for creating experiments.

Table 9 shown below illustrates an example of a table containing data in work list format generated using the steps illustrated in Figure 6.

**Table 9:**

| **Robot Work list Commands** | | | | | | | | |
|---|---|---|---|---|---|---|---|---|
| **Source Rack** | **Source Well** | **Destin Rack** | **Destin Well** | **Vol (uL)** | **Pipetting Time** | | **Transfer Time After Start (min)** | **Lipuid Class Liquid Class** |
| C3.F96DeepWell | 1 | C1.F96MTP | 3 | 10 | | | 1 min 0 sec | WaterAED |
| C3.F96DeepWell | 1 | C1.F96MTP | 4 | 10 | | | 1 min 0 sec | WaterAED |
| C3.F96DeepWell | 1 | C1.F96MTP | 11 | 10 | | | 1 min 0 sec | WaterAED |
| C3.F96DeepWell | 1 | C1.F96MTP | 12 | 10 | | | 1 min 0 sec | WaterAED |
| C3.F96DeepWell | 1 | C1.F96MTP | 7 | 10 | | | 1 min 0 sec | WaterAED |
| C3.F96DeepWell | 1 | C1.F96MTP | 8 | 10 | | | 1 min 0 sec | WaterAED |
| C3.F96DeepWell | 1 | C1.F96MTP | 15 | 10 | | | 1 min 0 sec | WaterAED |
| C3.F96DeepWell | 1 | C1.F96MTP | 16 | 10 | | | 1 min 0 sec | WaterAED |
| C3.F96DeepWell | 1 | C1.F96MTP | 19 | 10 | | | 2 min 0 sec | WaterAED |
| C3.F96DeepWell | 1 | C1.F96MTP | 20 | 10 | | | 2 min 0 sec | WaterAED |
| C3.F96DeepWell | 1 | C1.F96MTP | 27 | 10 | | | 2 min 0 sec | WaterAED |
| C3.F96DeepWell | 1 | C1.F96MTP | 28 | 10 | | | 2 min 0 sec | WaterAED |
| C3.F96DeepWell | 1 | C1.F96MTP | 23 | 10 | | | 2 min 0 sec | WaterAED |
| C3.F96DeepWell | 1 | C1.F96MTP | 24 | 10 | | | 2 min 0 sec | WaterAED |
| C3.M19Trough | 4 | C1.F96MTP | 65 | 20 | 20 | | 164 min 0 sec | WaterAED |
| C3.M19Trough | 4 | C1.F96MTP | 66 | 20 | 20 | | 164 min 0 sec | WaterAED |
| C3.M19Trough | 4 | C1.F96MTP | 73 | 20 | 20 | | 164 min 0 sec | WaterAED |
| C3.M19Trough | 5 | C1.F96MTP | 75 | 20 | 20 | | 164 min 0 sec | WaterAED |
| C3.M19Trough | 5 | C1.F96MTP | 69 | 20 | 20 | | 164 min 0 sec | WaterAED |
| C3.M19Trough | 5 | C1.F96MTP | 70 | 20 | 20 | | 164 min 0 sec | WaterAED |

In Table 9, the first four columns include source and destination rack and well information for a given experiment. The next column is the volume of the reagent. The column labeled "Pipetting Time" specifies the pipetting time for extracting the reagent. The column labeled "Transfer Time After Start" includes the time after start of the experiment that a given transfer occurs. Finally, the column labeled "Liquid Class" specifies a liquid class for the particular concentration of each reagent.

Scheduling incubation times in a manner that avoids conflicts can be a difficult problem. Figures 7A-7C illustrate exemplary steps that can be performed by automated experimental design software **112** in automatically scheduling incubation times according to an embodiment of the present invention. Referring to Figures 7A-7C, in step **ST1,** automated experimental design software **112** creates an array containing a pattern for each row in the protocol table. As discussed above, a pattern is a text string that represents an experiment. Two commas exist in the pattern for each reagent column. "1" before the first comma in the pattern indicates that a transfer is occurring. A number before the second comma indicates the incubation time before the next transfer takes place. No number appears in the second column if no incubation time is specified. For example, the pattern "1,20," indicates an incubation time of 20 minutes before adding a reagent. In step **ST2**, automated experimental design software **112** determines the total of all specified incubation times for each row. In step **ST3**, automated experimental design software **112** selects rows with the same pattern and the highest incubation totals that have not already been processed.

It is preferable to schedule experiments having the highest incubation time totals first because these experiments take the longest to perform. If the robot creates the assays required for these experiments first, the robot can perform other experiments while these experiments are incubating.

In step **ST4**, automated experimental design software **112** creates an array of the selected rows containing all destination wells, along with their associated destination racks. Automated experimental design software **112** sorts the array first by destination number and then by well number.

In step **ST5**, automated experimental design software **112** transfers the first group of 8 or less rows that have not already been processed into another array.

In step **ST6**, automated experimental design software **112** reorders the group of 8 or less wells to increase pipetting efficiency, using the following parameters:
The closest well spacing that two consecutive tips can pipette to at the same time, and
The number of wells in a single column (to determine how many wells can be pipetted at the same time without removing the robot arm).

The reason it is desirable to reorder the rows is to maximize pipetting efficiency. For example, a robot can have four syringe-like dispensers to pipette reagents into wells in a micro-titer plate column. Since the wells in the micro-titer plate can be spaced too closely for adjacent dispensers of the robot to pipette the wells simultaneously, it is desirable to schedule experiments so that robot movement is minimized. For example, if four adjacent wells in a micro-titer plate are numbered "1| 2| 3| 4|" the robot might not be able to add reagents to the wells simultaneously. Thus, one possibility is to schedule the wells to be pipetted in the order "1|2|3|4|" However, this would require four movements of the robot arm and is therefore inefficient. Accordingly, it is desirable to reduce the number of movements and schedule as many consecutive additions as possible. For example, the robot might be able to add reagents to wells 1 and 3 simultaneously and to wells 2 and 4 simultaneously. This would require only two robot movements. Step **ST6** is directed to increasing this type of pipetting efficiency.

In step **ST7**, automated experimental design software **112** transfers the reordered sets of 8 or less wells to a three-dimensional array called PriorityOfAIIExps. The dimensions are referred to herein as A, B, and C and are defined as follows:
A=1-total number of sets of 8 or less transfers (priority number, where 1=highest priority)
B=1-3 (1=destination wells, 2=destination racks, 3=row number)
C=1-8 (break down the wells, racks, and row numbers for 8 individual tips)

After transmitting the reordered group of 8 wells to the three-dimensional array, automated experimental design software **112** determines if there are more destination wells in the current pattern that have not been processed. If there are more destination wells that have not been processed, control proceeds from step **ST7** to step **ST8** and returns to step **ST5.** Steps **ST5-ST8** are repeated until all destination wells in the current pattern have been processed.

Automated experimental design software **112** determines if all destination wells with the current pattern have been processed. Steps **ST9** and **ST10** represent the path taken by automated experimental design software **112** if all destination wells in the current pattern have been processed but all patterns have not been processed. If this condition occurs, steps **ST3** through **ST7** are repeated until all patterns have been .processed. By reordering wells in a manner that maximizes pipetting efficiency, the total time for performing an experiment is reduced.

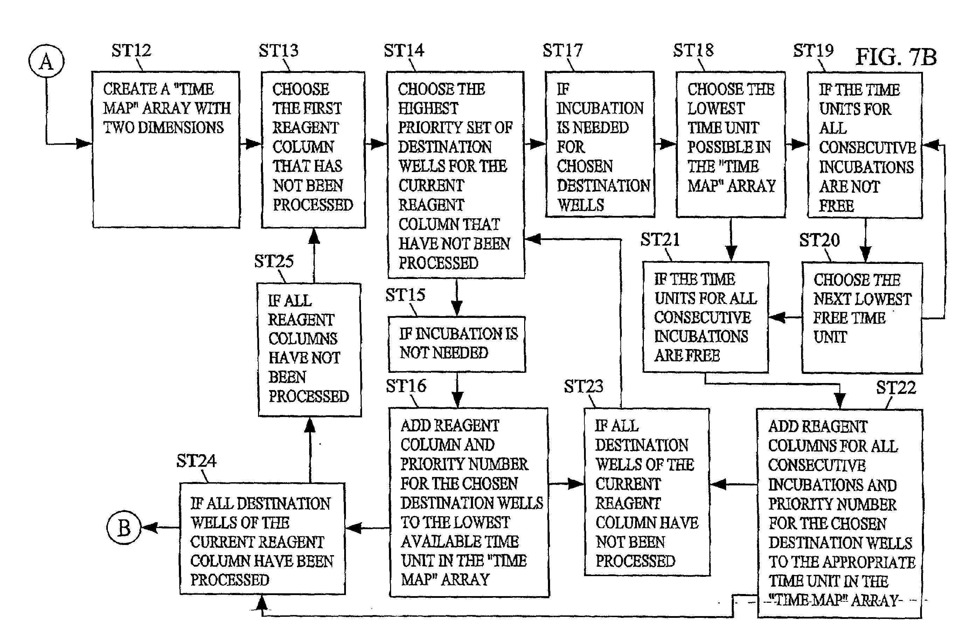

Steps **ST9** and **ST11** represent the path taken by automated experimental design software **112** if all destination wells with the current pattern have been processed and all patterns have been processed. If this condition occurs, control proceeds to step **ST12** in Figure 7B where a time map array is created. The time map array includes two dimensions (A, B) where A and B are defined as follows:
A=1-total number of time units needed to perform all experiments (A is an integer that represents the passage of time units specified by the user. This time unit can be set to the time needed to perform one set of 8 transfers.)
B=1-2 (1=priority number for the current set of 8 or less transfers, 2=current reagent source column number in the Source and Destination sheet that must be dispensed at the time specified in A)

In step **ST13**, automated experimental design software **112** chooses the first reagent column that has not been processed. In step **ST14**, automated experimental design software **112** chooses the highest priority set of destination wells for the current reagent column that has not been processed.

From step **ST14**, automated experimental design software **112** determines whether incubation time is needed. Step **ST15** represents the path taken by automated experimental design software **112** if incubation time is not needed. If incubation time is not needed, control proceeds to step **ST16** where automated experimental design software **112** adds the reagent column and priority number for the chosen destination wells to the lowest available time unit in the time map array.

From step **ST14**, step **ST17** represents the path taken by automated experimental design software **112** if incubation time is needed. From step **ST17**, control proceeds to step **ST18**, where automated experimental design software **112** chooses the lowest available time unit in the time map array. Automated experimental design software **112** then determines if time units for all consecutive incubations are free. Block **ST19** represents the path taken by automated experimental design software **112** if all consecutive time units are not free. In step **ST20**, if the selected time unit is not free, automated experimental design software **112** chooses the next lowest free time unit. Block **ST21** represents the path taken by automated experimental design software **112** if the time units for all consecutive incubations are free or if the next lowest time unit has been selected in step **ST18**. If the required time units for all consecutive incubations are free, in step **ST22**, automated experimental design software **112** adds reagent columns for all consecutive incubations and priority number for the chosen destination wells to the appropriate time unit(s) in the time map array. Automated experimental design software **112** then determines if all destination wells of the current reagent column have been processed. Block **ST23** represents the path taken by automated experimental design software **112** if all destination wells of the current reagent column have not been processed. If this condition is true, steps **ST14-ST23** are repeated until all destination wells of the current reagent column have been processed.

Block **ST24** represents the path taken by automated experimental design software **112**, if all destination wells of the current reagent column have been processed. If this condition is true, automated experimental design software **112** then determines whether all reagent columns have been processed. Block **ST25** represents the path taken by automated experimental design software **112** if all reagent columns have not been processed. If this condition is true, control returns to step **ST13**, where the next reagent column that has not been processed is selected.

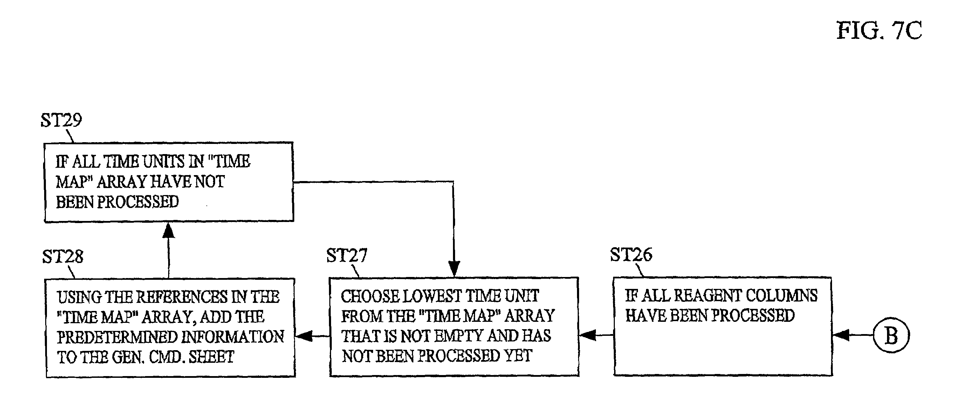

From step **ST24**, **ST26** in Figure 7C represents the path taken by automated experimental design software **112** if all reagent columns have been processed. If all reagent columns have been processed, in step **ST27**, automated experimental design software **112** chooses the lowest time unit from the time map array that is not empty and has not been processed. In step **ST28**, automated experimental design software **112** uses the references in the time map array and adds predetermined information found in the PriorityOfAIIExps array and the Source and Destination sheets to the GenCmd sheet. This predetermined information includes:
- source rack to column 1;
- source well to column 2;
- destination rack to column 3;
- destination well to column 4;
- transfer volume to column 5;
- transfer time after start to column 8;
- liquid class to column 9.

Step **ST29** represents the path taken by automated experimental design software if all time units in the time map array have not been processed. If this condition occurs, steps **ST27** and **ST28** are repeated until all time units in the time map array have been processed.

By automatically scheduling incubation times in a manner that maximizes pipetting efficiency and avoids conflicts, automated experimental design software **112** reduces the time for creating experiments and increases the efficiency with which experiments are performed. As a result, more experiments can be performed in a shorter time period.

Returning to Figure 2, once the work list commands are generated, in step **ST8,** the user loads the work list commands on the robot computer. This can be accomplished by saving the GenCmd spreadsheet to a portable storage medium, such as a floppy disk, and manually carrying the floppy disk to robot control computer **102** (Figure 1), which is usually located in a laboratory. Alternatively, if the computer on which the work list commands were generated is connected to the robot computer via a local area network, the user may save the work list commands to a network drive accessible by robot control computer **102**.

In step **ST9**, the user prepares the child stocks. The child stocks are prepared according to the needed concentrations illustrated in Table 6. The user places the child stocks in the specified locations on the robot. For convenience, the user may obtain a printout of Table 6 to assist in preparation of the child stocks.

In step **ST10**, once the child stocks have been prepared and placed in the appropriate positions accessible by the robot and the work list commands have been loaded, the user runs the experiment. Running the experiment comprises actuating a program that reads the work list commands from the GenCmd spreadsheet, converts the commands to robot instructions, and controls the robot using the instructions. An exemplary program for generating robot control commands from work list commands is LIQUIDMOVER™ or GEDI™ available from GlaxoSmithKline, Inc. of Research Triangle Park, North Carolina. The robot then performs the experiments as indicated in the GenCmd sheet.

Once the experiment is complete, in step **ST11,** the user obtains and analyzes the results. Obtaining the raw data from the experiment can include moving the micro-titer plate used to create the experiment to an analyzer or reader. The analyzer analyzes the individual wells and the reactions that occur therein. Most commercial readers produce results in text format. These results are then paired with the experiments and the data is analyzed for statistical significance.

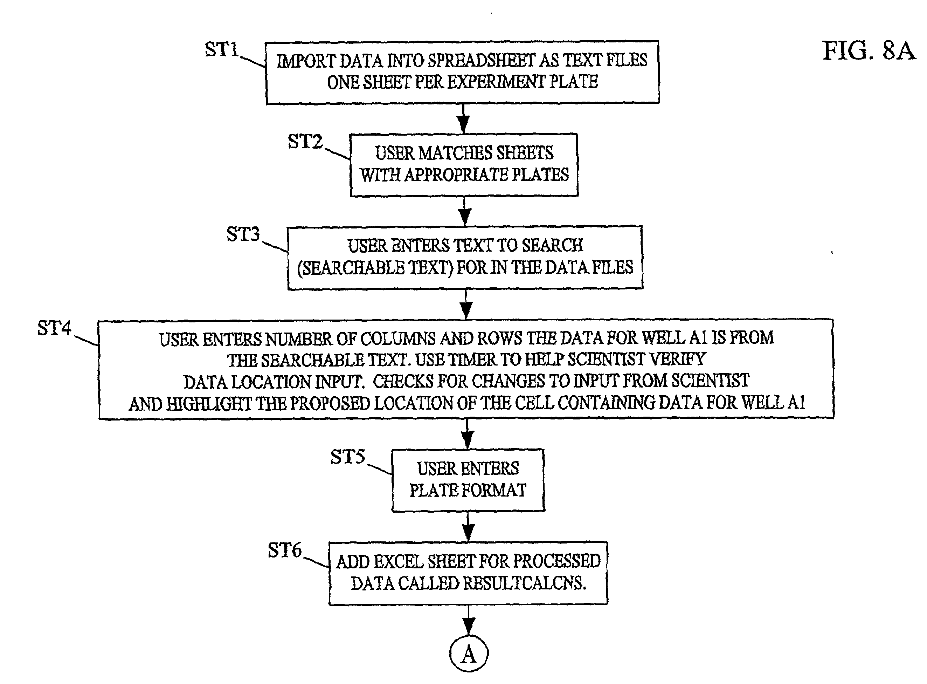

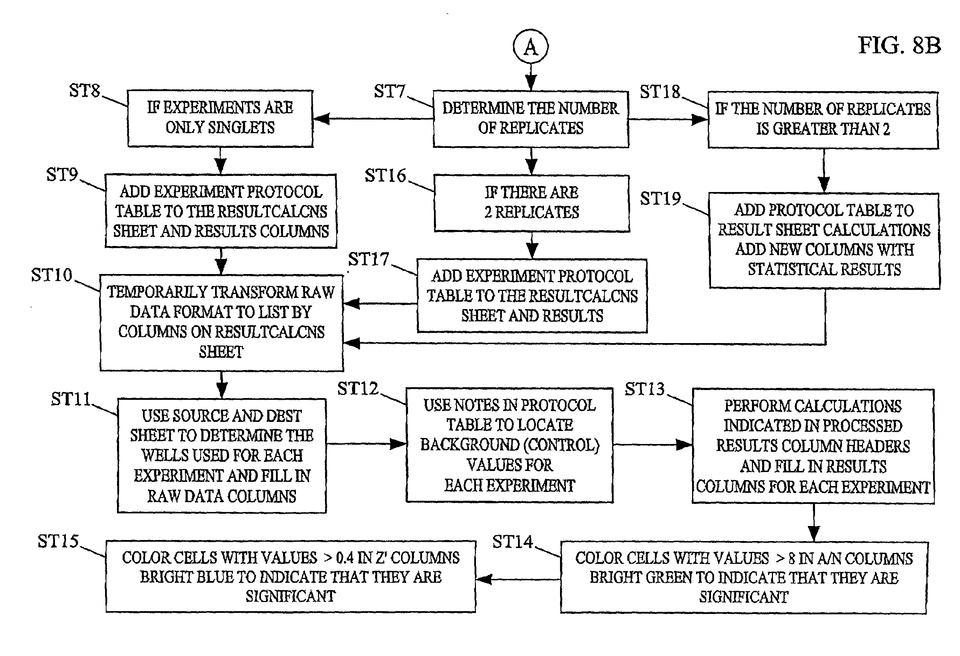

One problem with high-throughput screening is pairing the experimental results with the individual experiments. Different commercially available readers have different output formats. Due to the large number of experiments performed and the various reader output formats, this process can be time consuming. However, according to the present invention, results are automatically paired with the experiments and analyzed for statistical significance. Figures 8A and 8B are a flow chart illustrating exemplary steps performed by automated experimental design software **112** according to an embodiment of the present invention in pairing experimental results with experiments and analyzing the results. Referring to Figure 8A, in step **ST1,** the data output from the reader is imported into a spreadsheet as text files. One sheet is preferably imported per experiment plate. In step **ST2**, the user performing the experiments matches the spreadsheet with the appropriate plate used in the experiment.

Because different readers produce different output formats, it is necessary to locate the experimental result corresponding to the first cell in the first column of the plate. Automated experimental design software **112** automates this step. In step **ST3**, the user enters searchable text for automated experimental design software **112** to look for in the experimental results file that uniquely identifies a particular manufacturer's output. For example, a VICTOR™ reader (available from Wallac Oy Corporation of Turku, Finland) might always write the word "Victor" in the experimental results file. The text chosen to search for is preferably always in the same cell relative to the first cell containing data (well A1) for every plate. In step **ST4,** the user enters the number of rows and columns the data for well A1 is from the searchable text. For example, the user can instruct automated experimental design software **112** to move three rows to the right and two columns down from the searchable text. Automated experimental design software **112** then uses a timer to help the user verify the data location input. The timer checks for changes to input from the scientist and highlights the proposed location of the cell containing the data for A1. If cell A1 can not be highlighted, the scientist can correct the location by specifying a reference to cell(1,1) of the spreadsheet. Automated experimental design software **112** automatically stores the cell highlighted by the user. In this manner, the process of locating the first cell in the experimental results is simplified.

In step **ST5**, the user enters the plate format of the experimental results. Exemplary experimental results plate formats include list by rows, list by columns, and plate map. In step **ST6,** automated experimental design software **112** automatically creates an EXCEL™ sheet to store the result calculations. The remaining processing steps of automated experimental design software **112** depend on whether replicate experiments were performed.

In step **ST7**, automated experimental design software **112** determines whether there are any replicate experiments. For the simple case in which only singlets, i.e., single experiments, were performed, automated experimental design software **112** proceeds down the branch that starts with step **ST8.** In step **ST9,** automated experimental design software **112** adds the experiment protocol table to the result calculation sheet and also adds the following result columns: raw data, signal, background, and signal minus background (amplitude). In step **ST10**, automated experimental design software **112** temporarily transforms the raw data format to a list by columns format on the result calculation sheet. In step **ST11,** automated experimental design software **112** uses the source and destination sheet to determine the wells used for each experiment and fills in the data in the raw data columns. In step **ST12**, automated experimental design software **112** uses comments in the protocol table to locate background (control) values for each experiment. In step **ST13**, automated experimental design software **112** performs calculations indicated in the processed results column headers and fills in the results for each experiment. If there are replicates of 3 or more, automated experimental design software **112** highlights cells that are statistically significant with regard to the amplitude-to-noise ratio in step **ST14**. For example, the program can highlight cells that have an amplitude-to-noise ratio that is greater than 8. In step **ST15**, if there are 3 or more replicates, automated experimental design software **112** highlights cells that are statistically significant with regard to a parameter referred to as Z'. The formula for calculating Z' will be discussed in more detail below.

Returning to the central branch in the flow chart of Figure 8B, automated experimental design software **112** determines the number of replicates. Block **ST16** represents the path taken by automated experimental design software **112** if there are two replicates. If this condition occurs, control proceeds to step **ST17**, where automated experimental design software **112** adds the experiment protocol table to the results calculation sheets. The program also adds the following columns to the result calculation sheets: raw data (2 columns), average signal, average background, and signal minus background (amplitude). Once these columns are created, steps **ST9-ST14** are repeated to calculate amplitude-to-noise ratio and Z' values and determine the statistical significance thereof.

Step **ST19** represents the path taken by automated experimental design software **112** if there are more than two replicates. If this condition is true, control proceeds to step **ST18** and **ST19** where the program adds the protocol table to the result calculation sheets and new columns with the following headers:
Raw data (1 column per replicate)
Average signal (S)
Standard deviation (S.D.) of S
Percent CVs of S
Average background (B)
S.D. of B
Percent CVs of B
S-B (amplitude A)
Signal-to-background ratio (S/B)
Amplitude-to-noise ratio (A/N)
Z' factor

The amplitude-to-noise ratio is calculated as follows: A/N=A/SQRT((S.D. of S) ^2 + (S.D. of B) ^2). "S.D." represents the standard deviation and "SQRT" represents the square root. If the amplitude-to-noise ratio is greater than 8, this is indicated as a statistically significant value. The parameter Z' is computed as follows: Z'=1-(3*S.D. of S + 3*S.D. of B) / (S-B). If Z' is greater than 0.4, the result is indicated as statistically significant. Thus, using the procedures illustrated in Figures 8A and 8B, the program automatically pairs experimental results with experiments.

Table 10 shown below illustrates an exemplary experimental results data table produced by automated experimental design software **112** according to an embodiment of the present invention.

**Table 10:**

| **Experimental Results** | | | | | | | | | |
|---|---|---|---|---|---|---|---|---|---|
| **Ave Signal (S)** | **STDEV of S** | **%CV's of S** | **Ave Background (B)** | **STDEV of B** | **%CV's of B** | **S - B; Amplitud e (A)** | **Ave S/ B** | **Amplitude/ Noise (A/ N)** | **Z'** |
| 2163 | 623 | 29% | 771 | 27 | 4% | 1392 | 2.8 | 2.2 | 0 |
| 3265 | 459 | 14% | 888 | 34 | 4% | 2377 | 3.7 | 5.2 | 0.38 |
| 2451 | 101 | 4% | 719 | 14 | 2% | 1732 | 3.4 | 17.0 | 0.80 |
| 5231 | 768 | 15% | 689 | 24 | 3% | 4542 | 7.6 | 5.9 | 0.48 |
| 4982 | 269 | 5% | 532 | 9 | 2% | 4450 | 9.4 | 16.5 | 0.81 |
| 1899 | 76 | 4% | 722 | 38 | 5% | 1177 | 2.6 | 13.9 | 0.71 |
| 2004 | 354 | 18% | 704 | 42 | 6% | 1300 | 2.8 | 3.6 | 0.09 |
| 1765 | 243 | 14% | 812 | 76 | 9% | 953 | 2.2 | 3.7 | 0 |

The results in Table 10 are paired with the corresponding experiments and displayed to the user in a convenient format. As a result of automatically pairing results with experiments, automated experimental design software **112** facilitates interpretation of experimental results.

It will be understood that various details of the invention may be changed without departing from the scope of the invention. Furthermore, the foregoing description is for the purpose of illustration only, and not for the purpose of limitation― the invention being defined by the claims.

## Claims

1. A computer program product comprising computer executable instructions embodied in a computer-readable medium for performing steps for automatically reducing controls in experimental design, the steps comprising:
(a) reading a protocol table containing reagents and corresponding concentrations for a plurality of experiments;
(b) receiving input from a user identifying at least one non-controlled reagent for which a control is not required; and
(c) automatically identifying experiments for which controls are required based on the input and the protocol table.

2. The computer program product of claim 1 comprising determining a level to be used in the controls for the non-controlled reagent.

3. The computer program product of claim 2 wherein determining a level includes determining a minimum level of the non-controlled reagent to be used in control experiments.

4. The computer program product of claim 1 wherein automatically identifying experiments for which controls are required includes generating a pattern for each unique experiment, the pattern including concentrations for each controlled reagent and a predetermined symbol or symbols for each non-controlled reagent.

5. The computer program product of claim 4 comprising determining the number of wells required to perform all of the experiments based on the number of experiments in the protocol table and the number of unique patterns.

6. The computer program product of claim 5 comprising receiving input from the user regarding the number of available wells in a micro-titer plate used for the experiments.

7. The computer program product of claim 6 comprising assigning each experiment and control to a well in the micro-titer plate.

8. The computer program product of claim 6 determining whether the number of wells required to perform all of the experiments exceeds the number of wells available in the micro-titer plate.

9. The computer program product of claim 7 comprising presenting the user with a graphical display of the micro-titer plate and indicating wells used for the controls and for the experiments.

10. The computer program product of claim 8 comprising, in response to determining that the number of wells does not exceed the number of available wells prompting the user for additional experiments to be performed using the micro-titer plate.

11. The computer program product of claim 8 comprising, in response to determining that the number of wells required to perform the experiment exceeds the number of available wells, prompting the user for input for reducing the number of experiments to be performed.

12. A computer program product comprising computer executable instructions embodied in a computer readable medium for performing steps for generating experiment property tables, the steps comprising:
(a) reading a protocol table containing reagents and reagent concentrations for a plurality of experiments;
(b) counting the number of occurrences of each concentration of each reagent;
(c) receiving input from a user regarding parent stock concentrations, transfer volumes, dilution factors for the transfer volumes, and waste volumes for each reagent and storing the input in a second property table;
(d) automatically generating a third property table based on the first and second property tables, wherein the third property table includes intermediate stock concentrations for each reagent.

13. The computer program product of claim 12 comprising calculating the intermediate stock concentrations of each reagent based on the reagent transfer volume and the dilution factor for each reagent from the second property table and the concentrations for each reagent from the first property table.

14. The computer program product of claim 12 wherein the third property table includes the total volumes of intermediate stock required for each reagent.

15. The computer program product of claim 14 comprising calculating the total volume of each intermediate stock based on a buffer volume and a volume of parent stock for each concentration of each reagent.

16. A computer program product comprising computer executable instructions for performing steps for automatically scheduling incubation times for adding reagents in a plurality of experiments, the steps comprising:
(a) reading a protocol table containing reagent concentrations and incubation times for a plurality of experiments;
(b) generating an incubation time pattern for each experiment corresponding to an incubation time sequence for each experiment; and
(c) scheduling experiments to be performed by a robot based on the incubation time patterns.

17. The computer program product of claim 16 wherein scheduling experiments to be performed based on the incubation time patterns includes determining an incubation time total for each experiment and scheduling experiments to be performed in the order of descending incubation time totals.

18. The computer program product of claim 16 wherein scheduling experiments to be performed based on the incubation time patterns includes grouping experiments having equal incubation time patterns together.

19. The computer program product of claim 18 wherein grouping experiments having equal incubation times together includes storing the patterns for the experiments having equal incubation times in an array.

20. The computer program product of claim 16 comprising determining the number of wells in a micro-titer plate column that can be pipetted simultaneously by the robot without moving an arm of the robot and wherein scheduling experiments to be performed based on the incubation time patterns includes minimizing movements of the robot arm.

21. The computer program product of claim 16 wherein scheduling experiments to be performed based on the incubation time patterns includes scheduling the experiments to be performed in a manner that avoids time conflicts between movements of the robot.

22. The computer program product of claim 21 wherein scheduling experiments to be performed in a manner that avoids time conflicts between movements of the robot includes:
(a) grouping experiments together having equal incubation patterns;
(b) prioritizing the experiment groups based on total incubation times for each group;
(c) assigning a group having the highest priority to a first available time unit; and
(d) repeating steps (a)-(c) until all of the groups have been assigned to time units.

23. A method for automated experimental design, the method comprising:
(a) reading a protocol table including reagent concentrations and incubation times for a plurality of experiments
(b) automatically generating robot work list commands for controlling a robot to perform the experiments based on the protocol table;
(c) generating robot control commands based on the work list commands;
(d) controlling the robot to perform the experiments based on the work list commands;
(e) reading results from the experiments; and
(f) automatically grouping the results from the experiments with data for the experiments in the protocol table.

24. The method of claim 23 wherein automatically generating work list commands includes automatically scheduling the experiments to be based on the incubation times.

25. The method of claim 23 wherein automatically generating work list commands including determining positions on a micro-titer plate for performing the experiments.

26. The method of claim 23 wherein automatically generating work list commands includes receiving information from a user regarding control reduction for the experiments and automatically reducing the number of controls for the experiments based on the input.
